# FASCICULE DE BREVET EUROPEEN

(11) **EP 1 900 054 B1**
(45) Date de publication et mention de la délivrance du brevet: **20.02.2013**
(21) Numéro de dépôt: 06778675.6
(22) Date de dépôt: 26.06.2006
(51) Int. Cl.: H01M 8/02, H01M 8/24

(54) **PLAQUE BIPOLAIRE DE PILE À COMBUSTIBLE À FONCTION ÉTANCHÉITÉ INTÉGRÉE ET CELLULE DE PILE À COMBUSTIBLE COMPORTANT DE TELLES PLAQUES**
BRENNSTOFFZELLEN-BIPOLARPLATTE MIT INTEGRIERTER DICHTUNG UND BRENNSTOFFZELLE MIT SOLCHEN PLATTEN
FUEL CELL BIPOLAR PLATE WITH INTEGRATED SEALING AND FUEL CELL COMPRISING SUCH PLATES

(30) Priorité: 28.06.2005 FR 0506559
(43) Date de publication de la demande: 19.03.2008
(73) Titulaire: PEUGEOT CITROËN AUTOMOBILES S.A., 78140 Vélizy Villacoublay (FR); COMMISSARIAT A L'ENERGIE ATOMIQUE, 75015 Paris (FR)
(72) Inventeur: ROY, Francis, F-91940 Les Ulis (FR); JONCQUET, Guillaume, F-75015 Paris (FR); ADRIANSEN, Géry, F-92160 Antony (FR); POIROT-CROUVEZIER, Jean-Philippe, F-38450 Saint Georges De Commiers (FR); LE GALLO, Patrick, F-38560 JARRIE (FR)
(74) Mandataire: Ménès, Catherine
(86) Numéro de dépôt international: PCT/FR2006/001479
(87) Numéro de publication internationale: WO 2007/003751

(56) Documents cités:
- EP-A- 0 914 922
- WO-A-99/57777
- WO-A-2004/086541
- WO-A-2004/102712
- US-A- 6 037 075
- PATENT ABSTRACTS OF JAPAN vol. 1997, no. 12, 25 décembre 1997 (1997-12-25) & JP 09 202669 A (TOKYO GAS CO LTD), 5 août 1997 (1997-08-05)

## Description

L'invention concerne principalement une plaque bipolaire de pile à combustible.

L'invention concerne également une cellule de pile à combustible comprenant une telle plaque bipolaire.

Une pile à combustible est un dispositif électrochimique qui permet de convertir l'énergie chimique en énergie électrique à partir d'un carburant, généralement l'hydrogène, et d'un comburant, l'oxygène ou un gaz contenant de l'oxygène tel que l'air, le seul produit de la réaction étant l'eau accompagnée d'un dégagement de chaleur et d'une production d'électricité.

Au sein de la pile à combustible, la réaction chimique globale résultant des réactions se produisant aux électrodes est la suivante :

H₂ + ½ O₂ → H₂O

Une pile à combustible peut être utilisée pour fournir l'énergie électrique à tout dispositif tel que par exemple un ordinateur, un téléphone portable mais elle peut être également utilisée pour assurer la traction d'un véhicule automobile et/ou l'alimentation des dispositifs électriques contenus dans un véhicule.

Une pile à combustible peut être constituée d'une ou de plusieurs cellules.

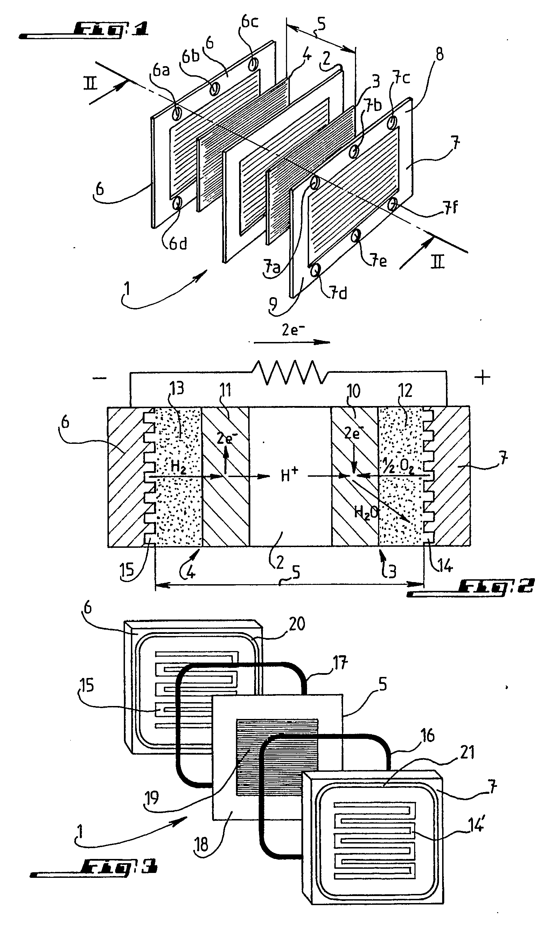

En référence à la figure 1 qui représente une cellule de pile à combustible de l'art antérieur, une telle cellule 1 comporte un électrolyte conducteur protonique 2 qui est pris en sandwich entre deux électrodes poreuses cathodique 3 et anodique 4 et qui assure le transfert électronique entre ces deux électrodes 3, 4.

A cet effet, l'électrolyte 2 peut être une membrane polymère échangeuse de protons d'épaisseur de 20 à 200 µm, la pile résultante étant une pile de type PEMFC (Proton Exchange Membrane Fuel Cell).

L'ensemble constitué par l'électrolyte 2 et les deux électrodes 3,4 forme une plaque d'assemblage membrane électrodes (AME) 5 qui est lui-même pris en sandwich entre des première 6 et deuxième 7 plaques bipolaires qui assurent la collecte du courant, la distribution du comburant et du carburant dans les électrodes et la circulation du fluide caloporteur.

Les plaques bipolaires 6,7 couramment utilisées sont réalisées dans des matériaux offrant de bonnes propriétés de résistance à la corrosion et de conductivité électrique, tels que des matériaux carbonés comme du graphite, du graphite imprégné de polymère ou des feuilles de graphite souple mis en forme par usinage ou par moulage.

Il est également possible, pour réaliser les plaques bipolaires 6,7, d'utiliser des matériaux métalliques tels que des alliages à base de titane, d'aluminium et de fer dont les aciers inoxydables. Dans ce cas, la mise en forme de la plaque bipolaire peut être obtenue par emboutissage ou estampage de feuilles de faible épaisseur.

Afin d'assurer la distribution du comburant, du carburant et du fluide caloporteur dans toutes les cellules constitutives de la pile, la deuxième plaque bipolaire 7 comporte six perçages 7a, 7b, 7c, 7d, 7e, 7f dont trois d'entre eux 7a, 7b, 7c sont régulièrement disposés sur le bords supérieur 8 de cette plaque 7, les trois autre perçages 7d, 7e, 7f étant, de façon symétrique, également régulièrement disposés sur le bord inférieur 9 de cette plaque 7.

La première plaque bipolaire 6 comporte les mêmes perçages disposés aux mêmes endroits que sur la plaque bipolaire 7, la figure 1 ne laissant apparaître que les trois perçages supérieurs 6a, 6b, 6c et un perçage inférieur 6d.

Les perçages 6a, 6b, 6c, 6d de la première plaque bipolaire 6 et les perçages 7a, 7b, 7c, 7d, 7e, 7f de la deuxième plaque bipolaire 7 doivent être alignés pour assurer la circulation des fluides à travers toutes les cellules constitutives de la pile lors de l'assemblage de cette pile.

Au niveau de chacun de ces perçages 7a, 7b, 7c, 7d, 7e, 7f, 6a, 6b, 6c, 6d, un conduit non représenté permet d'alimenter en ou de récupérer le fluide caloporteur, le carburant ou le comburant circulant à la surface de la plaque 6,7 ou dans la plaque 6,7 dans des canaux ou circuits de circulation de fluides prévus à cet effet et qui seront détaillés plus loin.

En référence à la figure 2 qui est une coupe selon la ligne II-II de la figure 1, les électrodes cathodique 3 et anodique 4 comportent chacune une couche active respective 10, 11 qui sont le siège des réactions respectivement cathodique et anodique et une couche de diffusion respective 12, 13 intercalée entre la couche active 10,11 et la plaque bipolaire correspondante 7,6, cette couche de diffusion 12, 13 pouvant être un substrat en papier ou un tissu de carbone.

La couche de diffusion 12,13 assure la diffusion homogène des réactifs tels que l'hydrogène et l'oxygène qui circulent dans les canaux respectifs 14, 15 formés par des rainures réalisées dans les plaques bipolaires respectives 7, 6.

De cette façon, la couche active 11 de l'électrode anodique 4 est alimentée en hydrogène via la couche de diffusion 13 et la réaction qui se produit dans cette couche active 11 est la suivante :

H₂ → 2e⁻ + 2H⁺ (1)

De la même façon, la couche active 10 de l'électrode cathodique 3 est alimentée en oxygène via la couche de diffusion 12 et la réaction qui se produit au niveau de cette couche active 10 ost la suivante :

½ O₂ + 2H⁺ + 2e⁻ → H₂O (2)

Ces réactions sont rendues possibles par la présence de la membrane conductrice 2 qui assure le transfert protonique depuis la couche active 11 de l'anode 4 vers la couche active 10 de la cathode 3.

De part la nature des fluides utilisés et les réactions électrochimiques mises en jeu, l'étanchéité est un point important lors de la conception d'une pile à combustible.

En référence à la figure 3 qui représente une cellule de pile à combustible de l'art antérieur, cette étanchéité peut être obtenue par la présence d'un joint 16, 17 interposé entre les plaques bipolaires respectives 6,7 sensiblement rectangulaires et la plaque d'assemblage membrane électrodes 5 constituée d'une zone active 19, siège des réactions électrochimiques et d'un cadre 18 entourant cette zone active 19.

En référence à la partie anodique de la cellule 1 représentée sur cette figure, lors de l'assemblage de la pile, le joint 17 vient s'encastrer dans une rainure périphérique conjuguée sensiblement rectangulaire 20 qui entoure les canaux de distribution du réactifs 15 et qui est réalisée dans la plaque bipolaire 6.

Lors de cette même opération d'assemblage, le cadre 18 de la plaque d'assemblage 5 vient en appui sur toute la périphérie de la plaque bipolaire 6 et comprime le joint correspondant 16 ce qui permet, de cette façon, que l'étanchéité entre la partie anodique et l'extérieur de la pile soit assurée.

Bien entendu, de façon symétrique dans la partie cathodique de la cellule 1, la plaque bipolaire 7 comporte également une rainure périphérique recevant le joint 17 et entourant les canaux de distribution en comburant de cette plaque 7 qui ne sont ni représentés ni référencés pour des raisons de vue sur cette figure. On comprend donc que la rainure 21 et les canaux de distribution 14' de la plaque bipolaire 7 qui sont référencés et représentés appartiennent à la partie anodique de la cellule voisine à la cellule 1.

Il est également possible de prévoir que la rainure 20 et sa rainure correspondante dans la plaque bipolaire de la partie cathodique soit de forme circulaire et dans ce cas, le joint 16 utilisé est un joint torique.

Selon l'art antérieur, le joint 16 peut également être un joint plat ou sérigraphié et dans ce cas, les pièces de la cellule et en particulier les plaques bipolaires 6,7 sont de forme adaptée.

Il peut également être prévu que le joint soit positionné avant montage sur la plaque d'assemblage membranes électrodes 5 au lieu d'être positionné sur la plaque bipolaire, dans ce cas également les pièces constituant la cellules sont adaptées.

Dans le dispositif de l'art antérieur représenté sur la figure 3, il est donc nécessaire que les plaques bipolaires 6,7 soient mise en forme mais également que le joint réponde à des critères stricts en terme de résistance notamment afin d'assurer l'étanchéité de la pile.

Le document WO 2004/102712 décrit une pile à combustible où l'étanchéité est due à la présence de bordures en relief. Le document WO 99/57777 décrit une pile à combustible comportant un joint en forme de feuillard.

Dans ce contexte, l'invention vise notamment une plaque bipolaire de pile à combustible permettant de pallier les inconvénients précités.

A cet effet, la plaque bipolaire 22 de l'invention est essentiellement caractérisée en ce qu'elle comporte au moins une bordure en relief 47, 23a, 33a, 40a, 27a, 35a, 41a, 23a sur au moins l'une de ses faces 51 de façon à assurer l'étanchéité d'au moins un circuit de fluide de la dite pile parmi les circuits d'entrée en comburant, en carburant et en fluide caloporteur et les circuits de collecte de comburant, carburant et fluide caloporteur, les dits circuits étant formés par la superposition d'ouvertures réalisées sur la dite plaque 22 formant respectivement moyen d'entrée et de sortie en comburant et en carburant 33,40,35,41 et d'ouvertures formant moyen d'entrée et de sortie en fluide caloporteur 23,27 lors de l'assemblage des cellules 1 constitutives de la pile à combustible.

Avantageusement, la plaque bipolaire de l'invention comporte au moins une bordure périphérique en relief 47 entourant les ouvertures formant moyen d'entrée et de sortie en réactifs 33,40,35,41 et les ouvertures formant moyen d'entrée et de sortie en fluide caloporteur 23,27.

De préférence, au moins une bordure en relief 23a, 27a, 33a, 40a, 41a, 35a entoure au moins une ouverture parmi les ouvertures formant moyen d'entrée et de sortie en réactifs 33,40,35,41 et les ouverture formant moyen d'entrée et de sortie en fluide caloporteur 23,27 de façon à assurer l'étanchéité du circuit de fluide correspondant lors de l'assemblage des cellules constitutives de la pile.

Dans ce cas, une bordure en relief 23a, 27a, 33a, 40a, 41a, 35a peut entourer chaque ouverture formant moyen d'entrée et de sortie en réactifs 33,40,35,41 et chaque ouverture formant moyen d'entrée et de sortie en fluide caloporteur 23,27 de façon à assurer l'étanchéité de tous les circuits de fluides lors de l'assemblage des cellules constitutives de la pile.

En outre, la bordure périphérique en relief 47 peut rejoindre pour au moins une ouverture formant moyen d'entrée ou de sortie en réactifs 33,40,35,41 ou d'une ouverture formant moyen d'entrée ou de sortie en fluide caloporteur 23,27 la partie la plus externe de la dite bordure en relief 23a,24a,27a,28a.

Selon l'invention, et comme indiqué dans la revendication 1, au moins une bordure en relief 47, 33a,35a,40a,41a,23a,24a,27a,28a supporte en tout ou partie un joint 54.

Préférentiellement, la bordure périphérique en relief 47 de la plaque 22 et les bordures en relief 33a,35a,40a,41a,23a,24a,27a,28a des ouvertures formant moyens d'entrée et de sortie des réactifs 33,35,40,41 et du fluide caloporteur 23,24,27,28 sont couvertes d'un joint 54.

En outre, le joint peut être un feuillard et peut être sérigraphié.

Avantageusement, la plaque bipolaire est en un matériau métallique mais peut également être en graphite expansé ou en composite chargé.

De préférence, les bordures en relief 47,33a,35a,40a,41a,23a,24a,27a,28a sont obtenues par emboutissage ou estampage.

L'invention concerne également une cellule de pile à combustible qui comprend une plaque d'assemblage membrane électrodes 50 comportant notamment une zone active 52 siège des réactions anodiques et cathodiques et qui est prise en sandwich entre deux plaques bipolaires décrites précédemment.

De préférence, la plaque d'assemblage membrane électrodes 50 comporte un cadre périphérique 53 qui, lors de l'assemblage de la dite cellule, vient en appui sur au moins une bordure en relief 47, 33a,35a,40a,41a,23a,24a,27a,28a de la plaque bipolaire 22.

Plus préférentiellement, la plaque d'assemblage membrane électrodes 50 comporte un cadre périphérique 53 qui, lors de l'assemblage de la dite cellule, vient en appui sur toutes les bordures en relief 47, 33a,35a,40a,41a,23a,24a,27a,28a de la plaque bipolaire 22.

Avantageusement, la plaque d'assemblage membrane électrodes 50 est compatible mécaniquement avec la plaque bipolaire 22.

Enfin, l'invention concerne aussi une pile à combustible comprenant au moins une cellule décrite précédemment.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du dispositif de l'invention et sur lesquels :
- la figure 1 est une vue en perspective éclatée d'une cellule de pile à combustible de l'art antérieur ;
- la figure 2 est une vue en coupe selon la ligne II-II de la figure 1 ;
- la figure 3 est une vue en perspective éclatée d'une cellule de pile à combustible de l'art antérieur ;
- la figure 4 est une vue de face de la plaque bipolaire de l'invention ;
- la figure 5 est une vue agrandie et en perspective de la partie cerclée notée V de la figure 4 ;
- la figure 6 est une vue en coupe selon la ligne VI-VI de la figure 5 de la partie supérieure de la plaque bipolaire lorsqu'elle est assemblée avec la plaque d'assemblage membrane électrodes ; et
- la figure 7 est une vue en coupe selon la ligne VII-VII de la figure 5 de la partie supérieure de la plaque bipolaire lorsqu'elle est assemblée avec la plaque d'assemblage membrane électrodes.

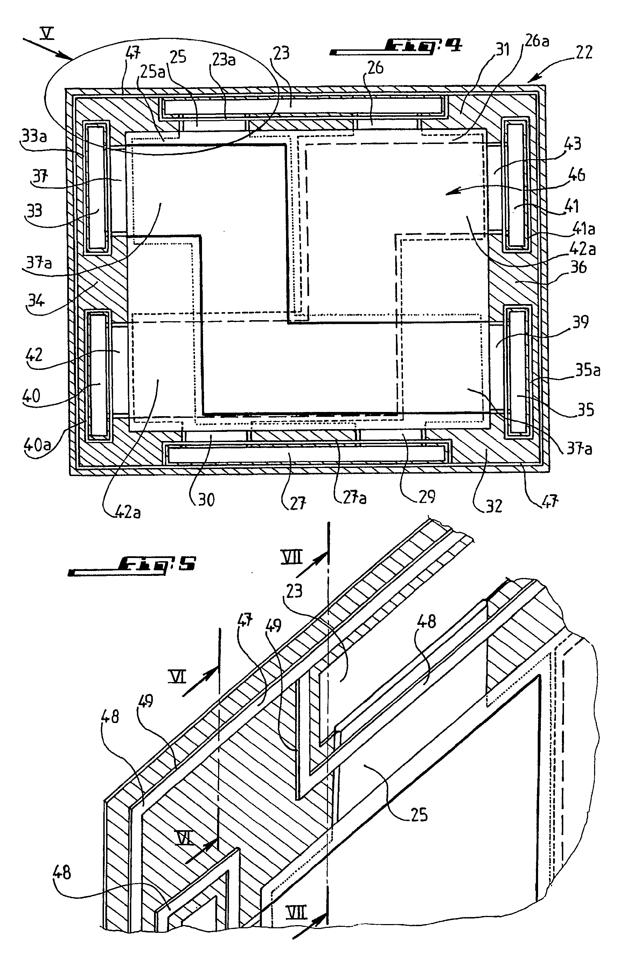

En référence à la figure 4, la plaque bipolaire 22 de l'invention est de forme rectangulaire.

La plaque 22 comporte une fenêtre d'entrée du fluide caloporteur 23 qui s'étend longitudinalement à la périphérie de la plaque 22 sur un premier bord longitudinal 31 et à partir duquel deux canaux d'introduction du fluide caloporteur 25,26 réalisés dans la plaque 22 s'étendent depuis la fenêtre d'entrée 23 jusqu'à la périphérie d'une surface centrale rectangulaire 46 au niveau de laquelle ils pénètrent dans la plaque 22.

Ces canaux 25,26 assurent ainsi l'introduction du fluide caloporteur dans la plaque 22 depuis la fenêtre d'entrée 23, le fluide caloporteur ainsi introduit circulant dans l'épaisseur de la plaque au niveau de la surface centrale 46 dans des circuit de distribution représentés schématiquement et notés 26a et 25a.

La plaque bipolaire 22 comporte également une fenêtre de collecte du fluide caloporteur 27 qui s'étend de façon longitudinale à la périphérie de la plaque 22 sur le deuxième bord longitudinal opposé 32 et à partir de laquelle deux canaux de collecte du fluide caloporteur 29,30 réalisés dans la plaque 22 s'étendent depuis la surface centrale rectangulaire 46 jusqu'à la fenêtre 27 permettant ainsi de collecter le fluide caloporteur ayant circulé dans les canaux de distribution en fluide caloporteur 25a, 26a.

Lorsque la pile est assemblée, les fenêtres d'entrée 23 et de collecte 27 du fluide caloporteur de toutes les cellules constitutives de la pile se superposent en formant un circuit de fluide caloporteur constitué d'un circuit d'entrée en fluide caloporteur et d'un circuit de sortie en fluide caloporteur.

La plaque 22 comporte également une fenêtre d'entrée du comburant 33 disposée à la périphérie de la plaque 22 en s'étendant transversalement sur une première moitié d'un premier bord transversal 34 de la plaque 22 et une fenêtre de sortie du comburant 35 disposée à la périphérie de la plaque 22 en s'étendant transversalement sur une moitié du deuxième bord transversal opposé 36 sensiblement en diagonale de la fenêtre d'entrée du comburant 33.

Un canal d'introduction du comburant 37 est réalisé dans la plaque 22 et s'étend depuis la fenêtre d'entrée du comburant 33 vers la surface centrale rectangulaire 46 de façon que le comburant diffuse depuis ce canal d'introduction 37 vers et jusqu'à un canal de distribution en comburant 37a réalisés dans la plaque bipolaire 22 au niveau de la surface centrale rectangulaire 46 et ouvert vers le haut pour diffuser dans l'électrode cathodique d'une plaque d'assemblage membrane électrode non représentée sur cette figure et destinée à venir en appui sur la plaque bipolaire et plus particulièrement au niveau de la zone centrale 46 comme il sera décrit plus loin.

Un canal de collecte du comburant 39 est réalisé dans la plaque 22 et s'étend depuis la fenêtre de sortie du comburant 35 vers la surface centrale 46 de façon que le comburant diffuse depuis le canal de distribution 37a vers la fenêtre de sortie 35 en passant dans le canal de collecte 39.

Lorsque la pile est assemblée, la superposition des fenêtres 33 et 35 de toutes les cellules constitutives de la pile forme un circuit de fluide transportant le comburant constitué d'un circuit d'entrée et d'un circuit de sortie en comburant.

De façon symétrique, la plaque bipolaire 22 comporte également une fenêtre d'entrée du carburant 40 s'étendant transversalement sur la deuxième moitié du premier bord transversale 34 et une fenêtre de sortie du carburant 41 s'étendant transversalement sur une moitié du deuxième bord transversale 36 en étant disposée sensiblement en diagonale par rapport à la fenêtre d'entrée 40.

La plaque bipolaire 22 comprend également un canal d'introduction du carburant 42 et un canal de collecte de carburant 43 s'étendant depuis les fenêtres respectives d'entrée 40 et de sortie 41 du carburant vers la surface centrale 46.

La carburant circule ainsi depuis la fenêtre d'entrée 40 jusqu'à la fenêtre de sortie 41 en passant par un canal de distribution en carburant 42a réalisé dans la plaque bipolaire 22, ce canal de distribution 42a étant ouvert vers le bas pour diffuser dans l'électrode cathodique d'une plaque d'assemblage membrane électrode non représentée sur cette figure et destinée à venir en appui sous la plaque bipolaire.

Lorsque la pile est assemblée, la superposition des fenêtres 40 et 41 de toutes les cellules constitutives de la pile forme un circuit de fluide transportant le comburant constitué d'un circuit d'entrée et d'un circuit de sortie en carburant.

En référence aux figures 4 et 5, la plaque bipolaire 22 comporte une bordure en relief périphérique 47 disposée sur toute la périphérie de la plaque 22 en entourant la fenêtre d'entrée du fluide caloporteur 23, la fenêtre d'entrée du comburant 33, la fenêtre d'entrée du carburant 35, la fenêtre de sortie du fluide caloporteur 27, la fenêtre de sortie du comburant 35, la fenêtre de sortie du carburant 41 et la surface centrale rectangulaire 46 de la plaque bipolaire 22.

Cette bordure en relief permet d'assurer l'étanchéité entre l'intérieur de la pile assemblée et l'extérieur de cette pile.

De plus, la fenêtre d'entrée du fluide caloporteur 23 la fenêtre d'entrée du comburant 33, la fenêtre d'entrée du carburant 40, la fenêtre de sortie du fluide caloporteur 27 la fenêtre de sortie du comburant 35 et la fenêtre de sortie du carburant 41 comportent chacun une bordure en relief respective 23a, 33a, 35a, 27a, 40a, 41a qui assure respectivement l'étanchéité de chacune de ces fenêtres 23,33,40,27,35,41 lorsque la pile est assemblée comme il sera décrit plus loin.

Au niveau de la fenêtre d'entrée 23 et de sortie 27 du fluide caloporteur, la partie de la bordure en relief respective 23a,27a la plus externe rejoint la bordure en relief périphérique 47 de la plaque 22 alors qu'au niveau des fenêtres d'entrée 33,40 et de sortie 35,41 en, respectivement, comburant et carburant, la bordure périphérique 47 de la plaque bipolaire 22 entoure chaque fenêtre 33,40,41,35 ainsi que sa bordure en relief correspondante 33a,40a,41a,35a.

La bordure périphérique 47 de la plaque bipolaire 22 ainsi que les bordures 23a, 33a, 40a, 27a, 35a, 41a respectives de la fenêtre d'entrée du fluide caloporteur 23 de la fenêtre d'entrée en comburant 33, de la fenêtre d'entrée en carburant 40, de la fenêtre de sortie du fluide caloporteur 27 de la fenêtre de sortie du comburant 35 et de la fenêtre de sortie du carburant 41 peuvent être réalisées par emboutissage ou estampage et présentent une face frontale plane 48, représentée sur la figure 5, parallèle au plan de la plaque bipolaire 22 en étant relié à celle-ci par des bords 49 droits ou obliques.

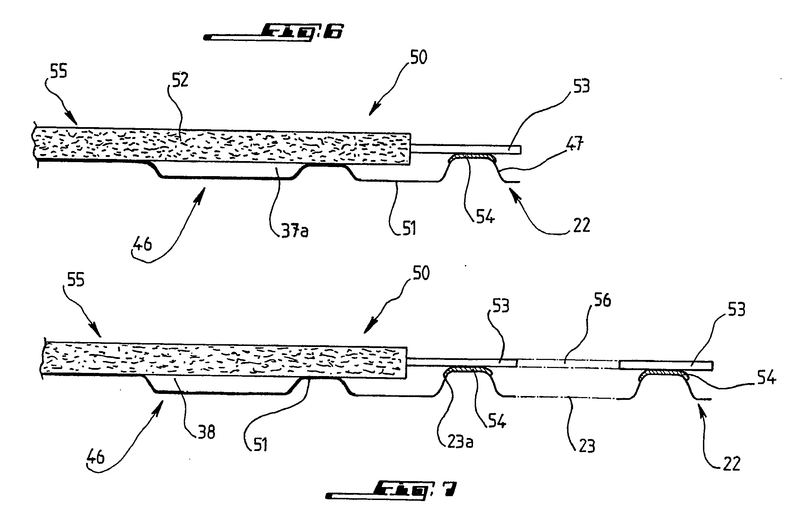

En référence à la figure 6, lors de l'assemblage de la pile à combustible, une plaque d'assemblage membrane électrodes 50 vient en appui sur la plaque bipolaire 22, seule la face supérieure 51 de la plaque bipolaire 22 comportant le canal de distribution de comburant 37a étant représenté sur cette figure.

La zone active 52 de la plaque d'assemblage membrane électrodes 50 comprend principalement les électrodes et l'électrolyte conducteur protonique et vient en appui au niveau de la surface centrale 46 de la plaque bipolaire 22 de façon que les réactifs circulant dans le canal de distribution 37a diffusent dans l'électrode en contact.

Selon l'invention, la plaque d'assemblage membrane électrodes 50 comporte un cadre 53 qui vient en appui sur la bordure périphérique 47 de la plaque bipolaire 22 sans déformation excessive, cette bordure 47 étant recouverte d'un joint sérigraphié 54.

Ce montage de la plaque d'assemblage membrane électrodes 50 et de la plaque bipolaire 22 permet ainsi d'assurer l'étanchéité entre la zone active au sein de laquelle se déroulent les réactions électrochimiques et l'extérieur de la cellule mais permet également de façon plus générale d'assurer l'étanchéité entre l'intérieur et l'extérieur de la pile assemblée.

On comprend que chaque demi-plaque bipolaire des cellules constitutives de la pile comporte de préférence cette bordure périphérique 47 afin d'assurer l'étanchéité précitée.

En référence à la figure 7, lorsque le cadre 53 de la plaque d'assemblage membrane électrodes 50 vient se superposer à la plaque bipolaire 22 au niveau de la première fenêtre d'entrée du fluide caloporteur 23, ce cadre 53 comporte une fenêtre 56 coïncidant avec cette fenêtre d'entrée du fluide caloporteur 23.

De cette façon, le cadre 53 vient en appui sur toute la bordure en relief de la fenêtre 23, ce qui permet d'assurer l'étanchéité entre la fenêtre d'entrée en fluide caloporteur 23 et l'extérieur de la cellule.

On comprend que le cadre 53 de la plaque d'assemblage membrane électrodes 50 vient également en appui au niveau de chaque fenêtre d'entrée et de sortie respectivement en comburant 33, 35, en carburant 40,41 et en fluide caloporteur 23,27 et qu'au niveau des fenêtres d'entrée respectivement en comburant 33 et en carburant 40 et au niveau des fenêtres de sortie respectivement en comburant 35 et en carburant 41, le cadre 53 vient en appui sur la bordure périphérique 33a, 40a, 35a, 41a de chacune de ces fenêtres 33, 40, 35, 41 ainsi que sur la bordure périphérique 47, qui pour ces quatre fenêtres 33, 40, 35, 41 entourent ces bordures périphériques 33a, 40a, 35a, 41a.

Ainsi, lors de l'assemblage de la pile, toute la périphérie de la plaque bipolaire et ainsi toutes les bordures en relief définies plus haut 47, 23a, 24a, 27a,28a,33a,35a,40a,41a viennent en contact avec le cadre 53 de la plaque d'assemblage membrane électrodes 50 et, sous l'action de l'effort de serrage, peuvent se déformer de manière élastique voire plastique afin de se conformer à l'empilement et d'assurer un effort linéique suffisant sur le cadre 53.

De cette façon, l'étanchéité entre l'intérieur et l'extérieur de la pile est obtenue par la présence de la bordure en relief périphérique 47 de la plaque bipolaire et l'étanchéité spécifique de chacune des fenêtres d'entrée et de sortie en réactifs 33,40,41,35 ou en fluide caloporteur 23,27 est obtenue par la présence de chacune des bordures en relief correspondante 33a,40a,41a,35a,23a,27a.

De préférence, on prévoit que le cadre 53 de la plaque d'assemblage membrane électrodes 50 est compatible mécaniquement avec la plaque bipolaire 22.

## Revendications

1. Plaque bipolaire (22) de pile à combustible, **caractérisée en ce qu'**elle comporte au moins une bordure en relief (47, 23a, 33a, 40a, 27a, 35a, 41a, 23a) sur au moins l'une de ses faces (51) de façon à assurer l'étanchéité d'au moins un circuit de fluide de la dite pile parmi les circuits d'entrée en comburant, en carburant et en fluide caloporteur et les circuits de collecte de comburant, carburant et fluide caloporteur, les dits circuits étant formés par la superposition d'ouvertures réalisées sur la dite plaque (22) formant respectivement moyen d'entrée et de sortie en comburant et en carburant (33,40,35,41) et d'ouvertures formant respectivement moyen d'entrée et de sortie en fluide caloporteur (23,27) lors de l'assemblage des cellules (1) constitutives de la pile à combustible et **caracterisé en ce qu'**au moins une bordure en relief (47, 33a, 35a, 40a, 41a, 23a, 24a, 27a, 28a) supporte en tout ou partie un joint (54) qui est un feuillard ou qui est sérigraphié.

2. Plaque bipolaire selon la revendication 1, caractérisée en qu'elle comporte au moins une bordure périphérique en relief (47) entourant les ouvertures formant moyen d'entrée et de sortie en réactifs (33,40,35,41) et les ouvertures formant moyen d'entrée et de sortie en fluide caloporteur (23,27).

3. Plaque bipolaire selon l'une quelconque des revendications 1 et 2, **caractérisée en ce qu'**au moins une bordure en relief (23a, 27a, 33a, 40a, 41a, 35a) entoure au moins une ouverture parmi les ouvertures formant moyen d'entrée et de sortie en réactifs (33,40,35,41) et les ouverture formant moyen d'entrée et de sortie en fluide caloporteur (23,27) de façon à assurer l'étanchéité du circuit de fluide correspondant lors de l'assemblage des cellules constitutives de la pile.

4. Plaque bipolaire selon la revendication 3, **caractérisée en ce qu'**une bordure en relief (23a, 27a, 33a, 40a, 41a, 35a) entoure chaque ouverture formant moyen d'entrée et de sortie en réactifs (33,40,35,41) et chaque ouverture formant moyen d'entrée et de sortie en fluide caloporteur (23,27) de façon à assurer l'étanchéité de tous les circuits de fluides lors de l'assemblage des cellules constitutives de la pile.

5. Plaque bipolaire selon l'une quelconque des revendications 2 à 4, **caractérisée en ce que** la bordure périphérique en relief (47) rejoint pour au moins une ouverture formant moyen d'entrée ou de sortie en réactifs (33,40,35,41) ou d'une ouverture formant moyen d'entrée ou de sortie en fluide caloporteur (23,27) la partie la plus externe de la dite bordure en relief (23a,24a,27a,28a).

6. Plaque bipolaire (22) selon l'une quelconque des revendications précédentes, **caractérisée en ce que** la bordure périphérique en relief (47) de la plaque (22) et les bordures en relief (33a,35a,40a,41a,23a,24a,27a,28a) des ouvertures formant moyens d'entrée et de sortie des réactifs (33,35,40,41) et du fluide caloporteur (23,24,27,28) sont couvertes du joint (54).

7. Plaque bipolaire selon l'une quelconque des revendications précédentes, **caractérisée en ce que** la dite plaque est en un matériau métallique.

8. Plaque bipolaire selon l'une quelconque des revendications 1 à 7, **caractérisée en ce que** la dite plaque est en graphite expansé ou en composite chargé.

9. Plaque bipolaire (22) selon l'une quelconque des revendications précédentes, **caractérisée en ce que** les bordures en relief (47, 33a, 35a, 40a, 41a, 23a, 24a, 27a, 28a) sont obtenues par emboutissage ou estampage.

10. Cellule de pile à combustible, **caractérisée en ce qu'**elle comprend au moins une plaque d'assemblage membrane électrodes (50) qui comporte notamment une zone active (52) siège des réactions anodiques et cathodiques et qui est prise en sandwich entre deux plaques bipolaires selon l'une quelconque des revendications 1 à 9.

11. Cellule selon la revendication 10, **caractérisée en ce que** la plaque d'assemblage membrane électrodes (50) comporte un cadre périphérique (53) qui, lors de l'assemblage de la dite cellule, vient en appui sur au moins une bordure en relief (47, 33a,35a,40a,41a,23a,24a,27a,28a) de la plaque bipolaire (22) .

12. Cellule selon la revendication 11, **caractérisée en ce que** la plaque d'assemblage membrane électrodes (50) comporte un cadre périphérique (53) qui, lors de l'assemblage de la dite cellule, vient en appui sur toutes les bordures en relief (47, 33a,35a,40a,41a,23a,24a,27a,28a) de la plaque bipolaire (22) .

13. Cellule selon l'une quelconque des revendications 11 et 12, **caractérisée en ce que** le cadre (53) de la plaque d'assemblage membrane électrodes (50) est compatible mécaniquement avec la plaque bipolaire (22).

14. Pile à combustible comprenant au moins une cellule selon l'une quelconque des revendications 10 à 13.

## Claims

1. Bipolar fuel cell plate (22), **characterised in that** it comprises at least one rim in relief (47, 23a, 33a, 40a, 27a, 35a, 41 a, 23a) on at least one of its faces (51) so as to ensure the fluidtightness of at least one fluid circuit of said cell among the oxidant, fuel and heat-transfer fluid inlet circuits and the oxidant, fuel and heat-transfer fluid collection circuits, said circuits being formed by the superimposition of openings produced on said plate (22) forming respectively oxidant and fuel inlet and outlet means (33, 40, 35, 41) and openings forming respectively heat-transfer fluid inlet and outlet means (23, 27) when the units (1) constituting the fuel cell are assembled, and **characterised in that** at least one rim in relief (47, 33a, 35a, 40a, 41 a, 23a, 24a, 27a, 28a) supports, in whole or in part, a gasket (54) that is a strip or is screen printed.

2. Bipolar plate according to claim 1, **characterised in that** it comprises at least one peripheral rim (47) in relief, surrounding the openings forming reagent inlet and outlet means (33, 40, 35, 41) and the openings forming heat-transfer fluid inlet and outlet means (23, 27).

3. Bipolar plate according to either one of claims 1 and 2, **characterised in that** at least one border in relief (23a, 27a, 33a, 40a, 41 a, 35a) surrounds at least one opening among the openings forming reagent inlet and outlet means (33, 40, 35, 41) and the openings forming heat-transfer fluid inlet and outlet means (23, 27) so as to ensure the fluidtightness of the corresponding fluid circuit when the units constituting the cell are assembled.

4. Bipolar plate according to claim 3, **characterised in that** a border in relief (23a, 27a, 33a, 40a, 41 a, 35a) surrounds each opening forming reagent inlet and outlet means (33, 40, 35, 41) and each opening forming heat-transfer fluid inlet and outlet means (23, 27) so as to ensure the fluidtightness of all the fluid circuits when the units constituting the cell are assembled.

5. Bipolar plate according to any one of claims 2 to 4, **characterised in that** the peripheral rim in relief (47) joins, for at least one opening forming a reagent inlet or outlet means (33, 40, 35, 41) or an opening forming heat-transfer fluid inlet or outlet means (23, 27), the most external part of said border in relief (23a, 24a, 27a, 28a).

6. Bipolar plate (22) according to any one of the preceding claims, **characterised in that** the peripheral border in relief (47) of the plate (22) and the borders in relief (33a, 35a, 40a, 41 a, 23a, 24a, 27a, 28a) of the openings forming reagent (33, 35, 40, 41) and heat-transfer fluid (23, 24, 27, 28) inlet and outlet means are covered by the gasket (54).

7. Bipolar plate according to any one of the preceding claims, **characterised in that** said plate is made from a metal material.

8. Bipolar plate according to any one of claims 1 to 7, **characterised in that** said plate is made from expanded graphite or composite with filler.

9. Bipolar plate (22) according to any one of the preceding claims, **characterised in that** the borders in relief (47, 33a, 35a, 40a, 41 a, 23a, 24a, 27a, 28a) are obtained by pressing or stamping.

10. Fuel cell unit, **characterised in that** it comprises at least one electrode membrane assembly plate (50) that comprises in particular an active zone (52) that is the origin of the anodic and cathodic reactions and is sandwiched between two bipolar plates according to any one of claims 1 to 9.

11. Unit according to claim 10, **characterised in that** the electrode membrane assembly plate (50) comprises a peripheral frame (53) which, when said unit is assembled, comes into abutment on at least one border in relief (47, 33a, 35a, 40a, 41 a, 23a, 24a, 27a, 28a) of the bipolar plate (22).

12. Cell according to claim 11, **characterised in that** the electrode membrane assembly plate (50) comprises a peripheral frame (53) which, when said unit is assembled, comes into abutment on all the borders in relief (47, 33a, 35a, 40a, 41 a, 23a, 24a, 27a, 28a) of the bipolar plate (22).

13. Unit according to either one of claims 11 and 12, **characterised in that** the frame (53) of the electrode membrane assembly plate (50) is mechanically compatible with the bipolar plate (22).

14. Fuel cell comprising at least one unit according to any one of claims 10 to 13.

## Patentansprüche

1. Bipolarplatte (22) für eine Brennstoffzelle, **dadurch gekennzeichnet, dass** sie zumindest auf der einen der beiden Seiten (51) zumindest einen hervorgehobenen Rand (47, 23a, 33a, 40a, 27a, 35a, 41 a, 23a) umfasst, um zumindest einen Fluidkreislauf der besagten Brennstoffzelle unter den Einlaufkreisen für Sauerstoffträger, Brennstoff und Kühlmittel, sowie die Sammelleitungen für Sauerstoffträger, Brennstoff und Kühlmittel abzudichten, wobei die besagten Kreise durch die Überlagerung von Öffnungen gebildet werden, die in die besagte Platte (22) eingearbeitet sind, die beim Zusammensetzen der Zellen (1), aus denen sich die Brennstoffzelle zusammensetzt, jeweils eine Ein- und Auslaufvorrichtung für Sauerstoffträger und Brennstoff (33, 40, 35, 41) bilden, sowie von Öffnungen, die jeweils eine Ein- und Auslaufvorrichtung für Kühlmittel (23, 27) bilden, und **dadurch gekennzeichnet, dass** zumindest ein hervorgehobener Rand (47, 33a, 35a, 40a, 41 a, 23a, 24a, 27a, 28a) eine Dichtung (54) oder einen Teil davon trägt, die aus einem Bandmaterial gebildet, oder in der Siebdrucktechnik aufgebracht wird.

2. Bipolarplatte nach Anspruch 1, **dadurch gekennzeichnet, dass** sie zumindest einen umlaufenden hervorgehobenen Rand (47) umfasst, der die Öffnungen umgibt, die jeweils die Ein- und Auslaufvorrichtung für die Reagenzien (33, 40, 35, 41) bilden, und die Öffnungen, die jeweils die Ein- und Auslaufvorrichtung für Kühlmittel (23, 27) bilden.

3. Bipolarplatte nach irgendeinem der Ansprüche 1 und 2, **dadurch gekennzeichnet, dass** zumindest ein hervorgehobener Rand (23a, 27a, 33a, 40a, 41 a, 35a) zumindest eine jener Öffnungen umgibt, die eine Ein- und Auslaufvorrichtung für die Reagenzien (33, 40, 35, 41) bilden, sowie die Öffnungen die jeweils eine Ein- und Auslaufvorrichtung für Kühlmittel (23, 27) bilden, um den entsprechenden Fluidkreis beim Zusammensetzen jener Zellen abzudichten, aus denen sich die Brennstoffzelle zusammensetzt.

4. Bipolarplatte nach Anspruch 3, **dadurch gekennzeichnet, dass** ein hervorgehobener Rand (23a, 27a, 33a, 40a, 41 a, 35a) jede Öffnung umgibt, die jeweils eine Ein- und Auslaufvorrichtung für die Reagenzien (33, 40, 35, 41) bildet, sowie jede Öffnung, die jeweils eine Ein- und Auslaufvorrichtung für Kühlmittel (23, 27) bildet, um alle Fluidkreise beim Zusammensetzen der Zellen abzudichten, aus denen sich die Brennstoffzelle zusammensetzt.

5. Bipolarplatte nach irgendeinem der Ansprüche 2 bis 4, **dadurch gekennzeichnet, dass** der umlaufende hervorgehobene Rand (47) bei zumindest einer Öffnung, die eine Ein- oder Auslaufvorrichtung für die Reagenzien (33, 40, 35, 41) bildet, sowie bei einer Öffnung, die eine Ein- oder Auslaufvorrichtung für Kühlmittel (23, 27) bildet, bis zum ganz außen liegenden Abschnitt des besagten hervorgehobenen Randes (23a, 24a, 27a, 28a) führt.

6. Bipolarplatte (22) nach irgendeinem der vorherigen Ansprüche, **dadurch gekennzeichnet, dass** der umlaufende hervorgehobene Rand (47) der Platte (22) und die hervorgehobenen Ränder (33a, 35a, 40a, 41 a, 23a, 24a, 27a, 28a) der Öffnungen, die Ein- und Auslaufvorrichtungen für die Reagenzien (33, 35, 40, 41) und für Kühlmittel (23, 24, 27, 28) bilden, von der Dichtung (54) abgedeckt werden.

7. Bipolarplatte nach irgendeinem der vorherigen Ansprüche, **dadurch gekennzeichnet, dass** die besagte Platte aus einem metallischen Werkstoff gefertigt ist.

8. Bipolarplatte nach irgendeinem der Ansprüche 1 bis 7, **dadurch gekennzeichnet, dass** die besagte Platte aus expandiertem Grafit oder aus verstärktem Verbundstoff gefertigt ist.

9. Bipolarplatte (22) nach irgendeinem der vorherigen Ansprüche, **dadurch gekennzeichnet, dass** die hervorgehobenen Ränder (47, 33a, 35a, 40a, 41 a, 23a, 24a, 27a, 28a) durch Tiefziehen oder Pressen erhalten werden.

10. Zelle einer Brennstoffzelle, **dadurch gekennzeichnet, dass** sie zumindest eine Platte des Elektroden-Membran-Verbundes (50) umfasst, die vor allem einen aktiven Bereich (52) als Sitz der anodischen und kathodischen Reaktionen umfasst, und die zwischen zwei Bipolarplatten nach irgendeinem der Ansprüche 1 bis 9 eingebaut wird.

11. Zelle nach Anspruch 10, **dadurch gekennzeichnet, dass** die Platte des Elektroden-Membran-Verbundes (50) einen umlaufenden Rahmen (53) umfasst, der sich beim Zusammensetzen der besagten Zelle an zumindest einem hervorgehobenen Rand (47, 33a, 35a, 40a, 41 a, 23a, 24a, 27a, 28a) der Bipolarplatte (22) anlegt.

12. Zelle nach Anspruch 11, **dadurch gekennzeichnet, dass** die Platte des Elektroden-Membran-Verbundes (50) einen umlaufenden Rahmen (53) umfasst, der sich beim Zusammensetzen der besagten Zelle an allen hervorgehobenen Rändern (47, 33a, 35a, 40a, 41 a, 23a, 24a, 27a, 28a) der Bipolarplatte (22) anlegt.

13. Zelle nach irgendeinem der Ansprüche 11 und 12, **dadurch gekennzeichnet, dass** der Rahmen (53) der Platte des Elektroden-Membran-Verbundes (50) mechanisch mit der Bipolarplatte (22) kompatibel ist.

14. Brennstoffzelle umfassend zumindest eine Zelle nach irgendeinem der Ansprüche 10 bis 13.
